# EUROPÄISCHE PATENTANMELDUNG

(11) **EP 1 271 444 A1**
(43) Veröffentlichungstag der Anmeldung: **02.01.2003**
(21) Anmeldenummer: 01115143.8
(22) Anmeldetag: 22.06.2001
(51) Int. Cl.: G08B 29/14, G08B 29/12

(54) **Video-Rauchdetektionssystem und Verfahren zu dessen Überprüfung**

(71) Anmelder: Siemens Building Technologies AG, 8034 Zürich (CH)
(72) Erfinder: Wieser, Dieter, 8700 Küsnacht (CH); Müller, Kurt, Dr., 8708 Männedorf (CH); Brupbacher, Thomas, Dr., 8706 Meilen (CH); Vollenweider, Walter, 8712 Stäfa (CH); Loepfe, Markus, Dr., 8873 Amden (CH)
(74) Vertreter: Dittrich, Horst, Dr.

(57) **Zusammenfassung**

Das Video-Rauchdetektionssytem umfasst eine Kamera (1) zur Aufnahme von Videobildern und eine Signalverarbeitungsstufe (2), in welcher eine Bestimmung der Helligkeit der einzelnen Pixel oder Gruppen von PixeIn der Videobilder erfolgt. Dabei wird ein für die Helligkeit der Pixel repräsentativer Wert gewonnen und in seinem zeitlichen Verlauf auf für das Auftreten von Rauch charakteristische Veränderungen untersucht. Zur Überprüfung des Systems zum Zweck einer Funktionsprüfung oder Kalibrierung ist das Signal der Kamera (1) so beeinflussbar, dass der Signalverarbeitungsstufe (2) eine für das Auftreten von Rauch charakteristische Veränderung des Videosignals vorgetäuscht wird. Letzteres erfolgt durch Mittel für eine Reduktion des Kontrasts des Videosignals.

## Beschreibung

Die vorliegende Erfindung betrifft ein Video-Rauchdetektionssystem mit einer Kamera zur Aufnahme von Videobildern und einer Signalverarbeitungsstufe, in welcher eine Bestimmung der Helligkeit der einzelnen Pixel oder Gruppen von Pixeln der Videobilder erfolgt, wobei ein für die Helligkeit der Pixel repräsentativer Wert gewonnen und in seinem zeitlichen Verlauf auf für das Auftreten von Rauch charakteristische Veränderungen untersucht wird.

Rauchdetektionssysteme dieser Art, wie sie beispielsweise in der WO 00/23959 und in der europäischen Patentanmeldung Nr. 00 128 606.1 beschrieben sind, werden bevorzugt in Tunnels verwendet, weil in diesen wegen der durch die fahrenden Autos und Züge verursachten Luftbewegung und Luftschichtung nicht gewährleistet ist, dass der bei einem Brand entstehende Rauch in nützlicher Frist bis zu an der Decke montierten Rauchmeldern gelangen würde.

Der Betreiber eines Tunnels, der ein solches Rauchdetektionssystem einsetzt, verlangt nicht nur die Einhaltung der vorgegebenen oder vereinbarten Spezifikationen, sondern auch die Möglichkeit von Funktionstests vor Ort, um die Einsatzbereitschaft des Systems jederzeit überprüfen zu können. Die naheliegende Möglichkeit solcher Funktionstests mit Hilfe eines Rauchgenerators ist aber extrem aufwändig, weil dafür der jeweilige Tunnel gesperrt werden muss. Der Hersteller des Rauchdetektionssystems hat seinerseits ein Interesse, im Rahmen der Qualitätskontrolle bei der Herstellung oder nach der Montage der Systeme die Einhaltung der Spezifikationen zu überprüfen und das System zu kalibrieren, wobei diese Kalibrierung möglichst einfach durchführbar sein soll. Auch hier ist die Verwendung von Rauchgeneratoren sehr aufwändig.

Durch die Erfindung soll nun ein Video-Rauchdetektionssystem angegeben werden, an welchem vor Ort, also sowohl an seinem Installationsort direkt im Tunnel, als auch am Herstellungsort oder an jedem anderen beliebigen Ort rasch und ohne grossen Aufwand eine Funktionsprüfung beziehungsweise Kalibrierung vorgenommen werden kann. Diese beiden im folgenden als Überprüfung bezeichneten Prozesse (Kalibrierung und Funktionsprüfung) sollen einfach durchführbar sein und zuverlässige und reproduzierbare Ergebnisse liefern.

Das erfindungsgemässe Video-Rauchdetektionssystem ist dadurch gekennzeichnet, dass zur Überprüfung des Systems das Signal der Kamera so beeinflussbar ist, dass der Signalverarbeitungsstufe eine für das Auftreten von Rauch charakteristische Veränderung des Videosignals vorgetäuscht wird.

Eine erste bevorzugte Ausführungsform des erfindungsgemässen Video-Rauchdetektionssystems ist dadurch gekennzeichnet, dass Mittel für eine Reduktion des Kontrasts des Videosignals vorgesehen sind.

Eine zweite bevorzugte Ausführungsform des erfindungsgemässen Video-Rauchdetektionssytems ist dadurch gekennzeichnet, dass die genannten Mittel durch ein vor der Kameralinse positionierbares optisches Filter gebildet sind.

Eine dritte bevorzugte Ausführungsform des erfindungsgemässen Video-Rauchdetektionssytems ist dadurch gekennzeichnet, dass die genannten Mittel durch ein zwischen Kamera und Signalverarbeitungsstufe zuschaltbares elektronisches Filter gebildet sind.

Eine vierte bevorzugte Ausführungsform des erfindungsgemässen Video-Rauchdetektionssystems ist dadurch gekennzeichnet, dass das Filter eine Transferfunktion mit vertikaler und horizontaler Filterung aufweist.

Eine fünfte bevorzugte Ausführungsform des erfindungsgemässen Video-Rauchdetektionssystems ist dadurch gekennzeichnet, dass die genannten Mittel eine Einrichtung zur Verstellung der Brennweite der Kamera aufweisen. Vorzugsweise sind die genannten Mittel ferngesteuert betätigbar.

Die vorliegende Erfindung betrifft weiter ein Verfahren zur Überprüfung eines Video-Rauchdetektionssystems, welches eine Kamera zur Aufnahme von Videobildern und eine Signalverarbeitungsstufe aufweist, bei welchem eine Bestimmung der Helligkeit der einzelnen Pixel oder Gruppen von Pixeln der Videobilder erfolgt und ein für die Helligkeit der Pixel repräsentativer Wert gewonnen und in seinem zeitlichen Verlauf auf für das Auftreten von Rauch charakteristische Veränderungen untersucht wird.

Das erfindungsgemässe Verfahren ist dadurch gekennzeichnet, dass zur Überprüfung des Systems das Signal der Kamera so beeinflusst wird, dass der Signalverarbeitungsstufe eine für das Auftreten von Rauch charakteristische Veränderung des Videosignals vorgetäuscht wird.

Eine erste bevorzugte Ausführungsform des erfindungsgemässen Verfahrens ist dadurch gekennzeichnet, dass der Kontrasts des Videosignals reduziert wird.

Beim erfindungsgemässen Video-Rauchdetektionssystem und beim erfindungsgemässen Verfahren zur Überprüfung eines Video-Rauchdetektionssystems wird also zur Vortäuschung von Rauch entweder ein optisches Filter vor die Kamera geschwenkt oder es wird das Videosignal am Ausgang der Kamera elektronisch so verfremdet, dass der Rauchalgorithmus anspricht, oder es wird die Brennweite der Kamera so weit verstellt, dass eine durch Rauch verursachte Bildunschärfe simuliert wird.

In allen Fällen erfolgt also eine Reduktion des Kontrasts des Videosignals, wodurch dieses für die Signalverarbeitungsstufe so "aussieht", als ob Rauch vorhanden wäre. Somit kann der Rauchdetektionsalgorithmus unter realistischen Bedingungen getestet werden, ohne dass ein Testfeuer entfacht oder ein Nebelgenerator aktiviert werden muss, was wegen der damit verbundenen Verkehrsbehinderung (Sperre des Tunnels) in einem Tunnel praktisch nicht realisierbar ist.

Im folgenden wird die Erfindung anhand von Ausführungsbeispielen und der Zeichnungen näher erläutert; es zeigt:
- Fig 1: eine schematische Darstellung eines ersten Ausführungsbeispiels eines erfindungsgemässen Video-Rauchdetektionssystems,
- Fig. 2: eine schematische Darstellung einer ersten Variante des Systems von Fig. 1; und
- Fig. 3: eine schematische Darstellung einer zweiten Variante des Systems von Fig. 1.

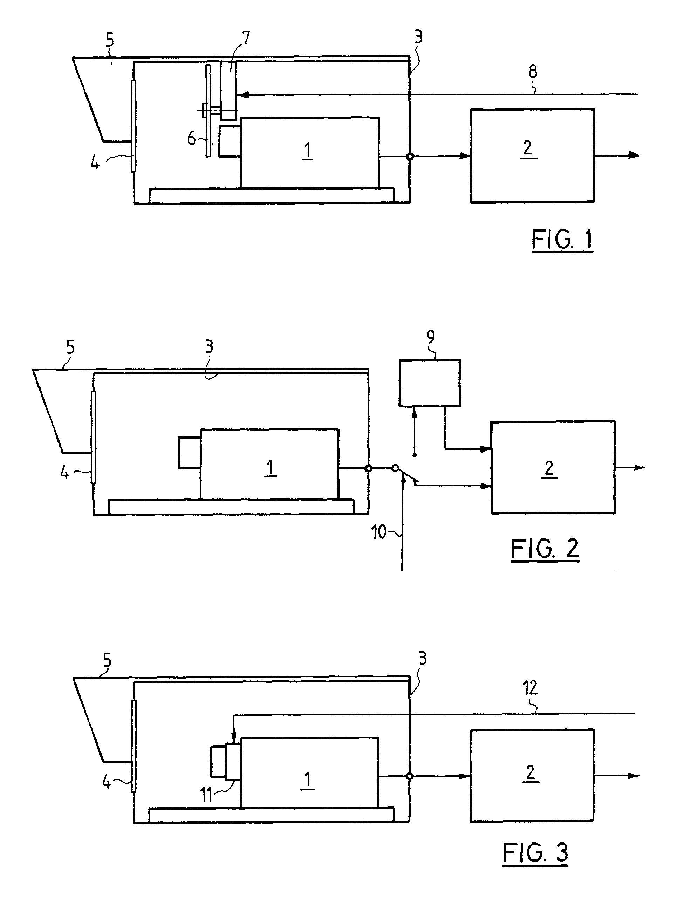

Das erfindungsgemässe Video-Rauchdetektionssystem besteht gemäss den Figuren 1 bis 3 im wesentlichen aus einer Anzahl von Videokameras 1 und einem gemeinsamen Prozessor 2, in welchem die Verarbeitung und Auswertung der Signale der Videokameras 1 erfolgt. Die Videokameras 1 sind beispielsweise in einem Strassentunnel montiert und dienen zur Verkehrsüberwachung, beispielsweise zur Überwachung der Einhaltung der Verkehrsregeln und zur Detektion von Staubildungen, Unfällen und dergleichen. Die Kameras sind mit einer bemannten Einsatzzentrale verbunden, in welcher das Verkehrsgeschehen im Tunnel über Monitore beobachtet wird. Die Prozessoren 2 sind dezentral angeordnet, wobei einer bestimmten Anzahl von beispielsweise 8 bis 10 Kameras jeweils ein gemeinsamer Prozessor 2 zugeordnet ist. Jede Videokamera 1 ist beispielsweise in einem Gehäuse 3 angeordnet, welches zum Schutz der Kamera vor äusseren Einflüssen, wie Beschädigung, Spritzwasser, Kondenswasser oder Staub dient. Das Gehäuse 3 weist an seiner Vorderseite ein transparentes Fenster 4 und an seiner Oberseite ein in Längsrichtung verschiebbares Dach 5 auf. Ein Gehäuse dieser Art ist beispielsweise aus der Internationalen Modellschutzregistrierung Nr. DM/049 356 bekannt.

Zusätzlich zur Verkehrsüberwachung dient das aus den Videokameras 1 und den Prozessoren 2 gebildete System zur Branderkennung durch Detektion des dabei entstehendes Rauches. Im Prozessor 2 werden die Videobilder in Pixel zerlegt, den einzelnen Pixeln und/oder Gruppen von diesen werden Helligkeitswerte zugeordnet und anhand eines Vergleichs der Helligkeitswerte der Pixel mit einem Referenzwert erfolgt die Entscheidung über das Vorhandensein von Rauch. Bei der Zuordnung der Helligkeitswerte zu den einzelnen Pixeln oder Pixelgruppen ist es wesentlich, dass diese Zuordnung von globalen Helligkeitsänderungen, also Änderungen der Beleuchtung des ganzen Bildes, unabhängig ist. Diese Unabhängigkeit von der Beleuchtung lässt sich dadurch erreichen, dass man den Pixeln Kantenwerte zuordnet, welche ja eine Ableitung darstellen. Die Erkennung von Rauch basiert auf der Annahme, dass die Kanten durch Rauch abgeschwächt werden oder verschwinden. Das heisst mit anderen Worten, dass durch den Rauch im Videosignal,das ist das Ausgangssignal der Kamera 1, eine Kontrastverminderung erfolgt.

Die Einzelheiten des Rauchdetektionsalgorithmus werden hier nicht näher beschrieben; es wird in diesem Zusammenhang auf die europäische Patentanmeldung Nr. 00128606.1 der Siemens Building Technologies AG vom 28.12.2000 verwiesen, auf welche hiermit ausdrücklich Bezug genommen wird.

Das dargestellte Video-Rauchdetektionssystem ist mit einer Testeinrichtung zur Funktionsprüfung und/oder Kalibrierung ausgerüstet, welche eine Überprüfung der Einhaltung der Spezifikationen und einen Funktionstest an jedem beliebigen Ort, insbesondere am Einsatzort des Systems, unter realistischen Bedingungen ermöglicht, ohne dass ein Testfeuer entfacht oder ein Nebelgenerator aktiviert werden muss. Die Testeinrichtung beruht darauf, das Signal der Kamera 1 so zu beeinflussen, dass dem Prozessor 2 eine für das Vorhandensein von Rauch charakteristische Veränderung des Videosignals vorgetäuscht wird. Die Fig. 1 bis 3 zeigen je ein Ausführungsbeispiel der Testeinrichtung.

Gemäss Fig. 1 ist die Testeinrichtung durch ein vor das Objektiv der Videokamera 1 schwenkbares optisches Filter 6 gebildet. Das Filter kann im einfachsten Fall ein Art von Kelle sein, die von einer Bedienungsperson vor die Kamera 1 gehalten werden kann, oder es kann als motorisch betätigbarer Schwenkflügel ausgebildet oder so wie in Fig. 1 Teil einer motorisch antreibbarer Scheibe sein. Die Scheibe weist neben dem als Diffusor wirkenden Filter 6 einen optisch voll durchlässigen Bereich auf, welcher im normalen Betriebszustand vor das Objektiv der Videokamera 1 geschwenkt ist. Das Filter 6 kann ein Oberflächendiffusor oder ein Volumendiffusor sein, auch ein sogenannter Weichzeichner, wie er in der Fotografie zur Kontrastminderung eingesetzt wird, kann als Filter 6 verwendet werden. Die Scheibe mit ihrem Antrieb 7 kann entweder so wie in der Figur dargestellt, im Inneren des Gehäuses 3 oder auch aussen an diesem angeordnet sein.

Wenn ein Test vorgenommen werden soll, erhält der Antrieb 7 der Scheibe über eine mit der Einsatzzentrale verbundene Leitung 8 ein entsprechendes Signal und schwenkt das optische Filter vor das Objektiv. Das Signal auf der Leitung 8 kann in der Zentrale manuell oder auch automatisch erzeugt werden, indem beispielsweise das Video-Rauchdetektionssystem periodisch in einen Testmode geschaltet wird. Durch die Streuwirkung des Filters 6 erfährt das von der Kamera 1 aufgenommene Bild eine Kontrastminderung, was sich im Ausgangssignal der Kamera 1 und damit im Eingangssignal des Prozessors 2 entsprechend auswirkt und vom Prozessor als Vorhandensein von Rauch interpretiert wird. Wenn vom Prozessor 2 kein Alarmsignal ausgelöst wird, erkennt das Bedienungspersonal in der Zentrale, dass eine Störung vorliegt.

Bei dem in Fig. 2 dargestellten Ausführungsbeispiel wird das Videosignal zwischen dem Ausgang der Kamera 1 und dem Eingang des Prozessors 2 über ein Filter 9 geführt und elektronisch verfremdet. Zu diesem Zweck weist das Filter 9 eine solche Impulsantwort auf, dass der Rauchdetektionsalgorithmus anspricht. Beispielsweise kann das Filter 9 eine Transferfunktion mit horizontaler und vertikaler Tiefpassfilterung aufweisen. Die Umschaltung des Videosignals auf das Filter 9 erfolgt über eine mit der Zentrale verbundene Leitung 10.

Beim Ausführungsbeispiel von Fig. 3 wird eine Kamera 1 mit motorisch verstellbarer Brennweite verwendet, wobei die Brennweitenverstellung mit dem Bezugszeichen 11 bezeichnet ist. Zur Durchführung eines Funktionstests oder einer Kalibrierung erhält die Brennweitenverstellung 11 über eine mit der Zentrale verbundene Leitung 12 ein Steuersignal, welches eine Verstellung der Brennweite bewirkt. Die dadurch entstehende Unschärfe entspricht einer Kontrastreduktion im Videobild der Kamera 1.

Selbstverständlich kann die in Fig. 1 bis 3 dargestellte Testeinrichtung auch vom Hersteller des Video-Rauchdetektionssystems zur Überprüfung der Einhaltung der Spezifikationen verwendet werden, wobei eine solche Überprüfung im Rahmen der Qualitätskontrolle im Werk erfolgen kann. Eine weitere Einsatzmöglichkeit der Testeinrichtung besteht bei der Abnahme des Systems nach dessen erfolgter Installation. Hier eröffnet die Testeinrichtung die Möglichkeit, dem Kunden die Funktionsfähigkeit des installierten Systems zu demonstrieren.

## Patentansprüche

1. Video-Rauchdetektionssytem mit einer Kamera (1) zur Aufnahme von Videobildern und einer Signalverarbeitungsstufe (2), in welcher eine Bestimmung der Helligkeit der einzelnen Pixel oder Gruppen von Pixeln der Videobilder erfolgt, wobei ein für die Helligkeit der Pixel repräsentativer Wert gewonnen und in seinem zeitlichen Verlauf auf für das Auftreten von Rauch charakteristische Veränderungen untersucht wird, **dadurch gekennzeichnet, dass** zur Überprüfung des Systems das Signal der Kamera (1) so beeinflussbar ist, dass der Signalverarbeitungsstufe (2) eine für das Auftreten von Rauch charakteristische Veränderung des Videosignals vorgetäuscht wird.

2. Video-Rauchdetektionssystem nach Anspruch 1, **dadurch gekennzeichnet, dass** Mittel für eine Reduktion des Kontrasts des Videosignals vorgesehen sind.

3. Video-Rauchdetektionssystem nach Anspruch 2, **dadurch gekennzeichnet, dass** die genannten Mittel durch ein vor der Kameralinse positionierbares optisches Filter (6) gebildet sind.

4. Video-Rauchdetektionssystem nach Anspruch 2, **dadurch gekennzeichnet, dass** die genannten Mittel durch ein zwischen Kamera (1) und Signalverarbeitungsstufe (2) zuschaltbares elektronisches Filter (9) gebildet sind.

5. Video-Rauchdetektionssystem nach Anspruch 4, **dadurch gekennzeichnet, dass** das Filter (9) eine Transferfunktion mit vertikaler und horizontaler Filterung aufweist.

6. Video-Rauchdetektionssystem nach Anspruch 2, **dadurch gekennzeichnet, dass** die genannten Mittel eine Einrichtung (11) zur Verstellung der Brennweite der Kamera (1) aufweisen.

7. Video-Rauchdetektionssystem nach einem der Ansprüche 2 bis 6, **dadurch gekennzeichnet, dass** die genannten Mittel ferngesteuert betätigbar sind.

8. Verfahren zur Überprüfung eines Video-Rauchdetektionssystems, welches eine Kamera (1) zur Aufnahme von Videobildern und eine Signalverarbeitungsstufe (2) aufweist, bei welchem eine Bestimmung der Helligkeit der einzelnen Pixel oder Gruppen von Pixeln der Videobilder erfolgt und ein für die Helligkeit der Pixel repräsentativer Wert gewonnen und in seinem zeitlichen Verlauf auf für das Auftreten von Rauch charakteristische Veränderungen untersucht wird, **dadurch gekennzeichnet, dass** zur Überprüfung des Systems das Signal der Kamera (1) so beeinflusst wird, dass der Signalverartbeitungsstufe (2) eine für das Auftreten von Rauch charakteristische Veränderung des Videosignals vorgetäuscht wird.

9. Verfahren nach Anspruch 8, **dadurch gekennzeichnet, dass** der Kontrast des Videosignals reduziert wird.

10. Verfahren nach Anspruch 9, **dadurch gekennzeichnet, dass** die Kontrastreduktion durch Vorschalten eines Diffusors vor die Kamera (1) erfolgt.

11. Verfahren nach Anspruch 9, **dadurch gekennzeichnet, dass** die Kontrastreduktion durch eine elektronische Verfremdung des Ausgangssignals der Kamera (1) erfolgt.

12. Verfahren nach Anspruch 9, **dadurch gekennzeichnet, dass** die Kontrastreduktion durch Unscharfstellen der Kamera (1) erfolgt.
